# EUROPEAN PATENT SPECIFICATION

(11) **EP 2 152 100 B1**
(45) Date of publication and mention of the grant of the patent: **13.12.2017**
(21) Application number: 08749064.5
(22) Date of filing: 23.04.2008
(51) Int. Cl.: A23L 2/52, A23C 9/152, A23C 9/137, A23C 9/154, A23L 2/66, A23F 5/40, A23L 33/12, A23C 9/13

(54) **BEVERAGE COMPOSITION COMPRISING CLA**
GETRÄNKEZUSAMMENSETZUNG ENTHALTEND CLA
COMPOSITION DE BOISSON CONTENANT CLA

(30) Priority: 24.04.2007 EP 07251722
(43) Date of publication of application: 17.02.2010
(73) Proprietor: Stepan Specialty Products, LLC, Wilmington, DE (US)
(72) Inventor: MULDER, Ellen, Maria, Elizabeth, 1521 AZ Wormerveer (NL); SCHMID, Ulrike, NL-1521 AZ Wormerveer (NL); MONSTER, Jeroen, NL-1521 AZ Wormerveer (NL)
(74) Representative: Potter Clarkson LLP
(86) International application number: PCT/EP2008/003263
(87) International publication number: WO 2008/128765

(56) References cited:
- JP-A- 2000 050 841
- US-A1- 2005 013 907
- US-A1- 2006 057 187
- US-B1- 6 468 556
- DATABASE WPI Week 200661 Thomson Scientific, London, GB; AN 2006-595031 XP002458032 & WO 2006/088188 A (KAO CORP) 24 August 2006 (2006-08-24)
- LIN T Y: "INFLUENCE OF LACTIC CULTURES, LINOLEIC ACID AND FRUCTO-OLIGOSACCHARIDES ON CONJUGATED LINOLEIC ACID CONCENTRATION IN NON-FAT SET YOGURT" AUSTRALIAN JOURNAL OF DAIRY TECHNOLOGY, DAIRY INDUSTRY ASSOCIATION OF AUSTRALIA, MELBOURNE, AU, vol. 58, no. 1, April 2003 (2003-04), pages 11-14, XP001166336 ISSN: 0004-9433
- JIMENEZ M; GARCIA H S; BERISTAIN C I: "Spray-dried encapsulation of conjugated linoleic acid (CLA) with polymeric matrices" JOURNAL OF THE SCIENCE OF FOOD AND AGRICULTURE, vol. 86, no. 14, 2006, pages 2431-2437, XP002458031

## Description

This invention relates to a beverage composition and to a method for its production.

The nutritional value of the diet has come under increasing scrutiny. Food supplements are often taken by individuals in order to obtain nutritional benefits. However, food supplements are typically in the form of capsules or the like and have the disadvantage that they are inconvenient in that individual has to remember to take them. Food supplements of this type are typically not flavoured and are not attractive to many consumers.

Nutritional supplements have been incorporated into food products but the resulting food products can have an undesirable taste and the incorporation of the supplement can have a deleterious effect on the stability of the products.

Conjugated linoleic acid (CLA) is a conjugated dienoic fatty acid having 18 carbon atoms. As a result of the presence of the two double bonds in CLA, geometrical isomerism is possible and the CLA molecule or moiety may exist in a number of isomeric forms. The cis9, trans11 ("c9t11") and trans10, cis12 ("t10c12") isomers of CLA are generally the most abundant and beneficial pharmacological effects have been identified for each of these isomers.

US 6,468,556 discloses the administration of CLA for inhibiting liver fat accumulation. However, this document is not concerned with the stability of its formulations or whether they have an acceptable taste and texture.

US 2007/0031536 relates to fermented foods that comprise CLA in the form of a glyceride.

US 2005/0013907 describes food compositions derived from milk comprising CLA glycerides. The compositions contain significant amounts of added sugar.

US 2006/0057187 discloses emulsions containing unsaturated fatty acids and their esters. The emulsions may be used in foods, including beverages.

JP-A-2000 050841 relates to a powder containing CLA. The powder can be used in foods and drinks and is prepared by mixing the CLA with gum arabic to form an oil-in-water emulsion, followed by drying and pulverising.

There remains a need for beverage compositions containing CLA that can have a low energy content (i.e., are low calorie) but still have good organoleptic properties such as taste and mouthfeel. We have now found beverage compositions that solve these problems.

Accordingly, the present invention provides, in a first aspect, a beverage composition comprising fat, protein, thickener and water, wherein the fat comprises at least 60% by weight of conjugated linoleic acid or a derivative thereof (CLA).

In a second aspect, the invention provides a beverage composition comprising fat, protein and water, wherein the fat comprises at least 60% by weight of conjugated linoleic acid or a derivative thereof (CLA), wherein the composition has an energy content of less than 100 kcal /100g, preferably less than 80 kcal/100g, most preferably 55 to 75kcal/100g.

A third aspect of the invention is a beverage composition comprising fat, protein and water, wherein the fat comprises at least 60% by weight of conjugated linoleic acid or a derivative thereof (CLA), wherein the composition comprises less than 8% by weight of added sugar.

In a fourth aspect, the invention provides a process for producing a beverage composition according to any one of the preceding claims, which comprises:
(i) forming an emulsion of the fat in water in the presence of a protein;
(ii) forming a dispersion or solution of the thickening agent in water;
(iii) mixing the compositions prepared in steps (i) and (ii) under shear;
(iv) optionally adding one or more additional ingredients;
(v) optionally homogenising and/or pasteurising; and
(vi) optionally cooling.

A fifth aspect of the invention is the use of a beverage composition according to the invention for a nutritional benefit. A preferred benefit is body weight management, in particular a reduced tendency to fluctuation of body weight.

Beverage compositions of the invention comprise a fat containing preferably at least 70% by weight CLA, even more preferably from 85 to 99% by weight CLA.

Preferably, the beverage comprises from 0.5 to 10%, more preferably from 1.0 to 10% by weight of protein, even more preferably from 2 to 8% by weight of protein. The protein can be added as such in a relatively concentrated from (e.g., having a protein content of greater than 70% by weight) or may form part of another material that is included in the composition, such as milk or yoghurt, for example. Preferably, the protein is selected from the group consisting of whey solids, skimmed milk powder and soya protein, low fat yoghurt, skimmed milk and mixtures thereof.

Preferably, the fat content of the beverage composition may be such that the beverage contains from 0.5 to 10% by weight fat, more preferably from 1 to 8% (e.g., from 2 to 8%) by weight fat, even more preferably from 3 to 7% by weight fat.

Beverage compositions of the invention preferably comprise at least 60% by weight of water, more preferably at least 70% by weight water, even more preferably from 80 to 95% by weight water. Water can be included as relatively
pure water or as part of another material such as, for example, milk, yoghurt or fruit juice.

Preferably, the beverages of the invention comprise a thickening agent. Suitable thickening agents include gum acacia, modified food starches (e.g., alkenylsuccinate modified food starches), anionic polymers derived from cellulose (e.g. carboxymethylcellulose), gum ghatti, modified gum ghatti, xanthan gum, tragacanth gum, guar gum, locust bean gum, pectin, gelatine, carrageenan and mixtures thereof.

Preferably, the thickening agent is selected from the group consisting of pectin, carrageenan, guar gum, gelatin, xanthan gum and mixtures thereof.

Typical amounts of the thickening agent are from 0.001 to 10% by weight of the compositions, more preferably from 0.1 to 5% by weight, preferably from 0.2 to 4% by weight.

Preferably, the beverage composition of the invention is a low calorie product. For example, the beverage composition may have an energy content of less than 100 kcal /100g, more preferably less than 80 kcal/100g, even more preferably from 55 to 75kcal/100g. Calorie contents can be determined by methods well known to those skilled in the art, for example, as set out in Mullan, 2006, Labelling Determination of the Energy Content of Food: http://www.dairyscience.info/energy_label.asp#3 and/or FAO Food And Nutrition Paper 77, Food energy - methods of analysis and conversion factors, Report of a Technical Workshop, Rome, 3-6 December 2002, Food And Agriculture Organization of the United Nations, Rome, 2003, ISBN 92-5-105014-7.

The compositions of the invention preferably comprise less than 8% by weight of added sugar (i.e., sucrose), more preferably less than 4% by weight of added sugar. The compositions may be substantially free or free of added sugar. Added sugar excludes sugars (i.e., sucrose) that are added as part of another component of the composition. The beverage compositions may comprise sugar replacers. Examples of sugar replacers include sorbitol, mannitol, isomaltitol, xylitol, isomalt, lactitol, hydrogenated starch hydrolysates (HSH, including maltitol syrups) and mixtures thereof. Additionally or alternatively, the compositions may comprise a sweetening agent. Suitable sweetening agents include saccharin, aspartame, sucralose, neotame, acesulfame potassium, acesulfame, taumatine, cyclamate and mixtures thereof. More preferred sweetening agents are selected from aspartame, acesulfame-K and mixtures thereof.

Beverage compositions of the invention optionally comprise one or more additional additives selected from flavours, colouring agents, vitamins, minerals, acidity regulators, preservatives, emulsifiers, antioxidants, dietary fibres and mixtures thereof. Each of these materials may be a single component or a mixture of two or more components.

Examples of suitable vitamins and minerals include calcium, iron, zinc, copper, phosphorous, biotin, folic acid, pantothenic acid, iodine, vitamin A, vitamin C, vitamin B1, vitamin B2, vitamin B3, vitamin B6, vitamin B9, vitamin B 12, vitamin D, vitamin E, and vitamin K. Preferably, when a vitamin or mineral is utilized the vitamin or mineral is selected from iron, zinc, folic acid, iodine, vitamin A, vitamin C, vitamin Be, vitamin B3, vitamin B6, vitamin B12, vitamin D, and vitamin E.

Acidity regulators include organic as well as inorganic edible acids. The acids can be added or be present in their undissociated form or, alternatively, as their respective salts, for example, potassium or sodium hydrogen phosphate, potassium or sodium dihydrogen phosphate salts. The preferred acids are edible organic acids which include citric acid, malic acid, fumaric acid, adipic acid, phosphoric acid, gluconic acid, tartaric acid, ascorbic acid, acetic acid, phosphoric acid, or mixtures thereof. Glucono Delta Lactone (GDL) may also be used, particularly wherein it is desired to reduce pH without introducing excessive acidic, or tart, flavour in the final composition.

Flavours include, for example, flavour oils, extracts, oleoresins, essential oils and the like, known in the art for use as flavourants in beverages. This component can also comprise flavour concentrates such as those derived from concentration of natural products such as fruits. Terpeneless citrus oils and essences can also be used herein. Examples of suitable flavours include, for example, fruit flavours such as orange, lemon, lime and the like, cola flavours, tea flavours, coffee flavours, chocolate flavours, dairy flavours. These flavours can be derived from natural sources such as essential oils and extracts, or can be synthetically prepared.

Colouring agents including natural and artificial colours may optionally be used. Non-limiting examples of colouring agents include fruit and vegetable juices, riboflavin, carotenoids (e.g. β-carotene), turmeric, and lycopenes.

Dietary fibres are complex carbohydrates resistant to digestion by mammalian enzymes, such as the carbohydrates found in plant cell walls and seaweed, and those produced by microbial fermentation.

Preservatives may be selected from the group consisting of sorbate preservatives, benzoate preservatives, and mixtures thereof.

Antioxidants include, for example, natural or synthetic tocopherols, TBHQ, BHT, BHA, free radical scavengers, propylgallate, ascorbylesters of fatty acids and enzymes with anti-oxidant properties.

The beverages of the invention may be free of dairy material and, for example, may be free of lactose.

The beverages of the invention are preferably free of lecithin.

Beverages of the invention may be carbonated or non-carbonated.

The beverage composition of the invention may take a number of different forms. In one aspect, the beverage is a fruit drink, for example selected from the group consisting of a yoghurt-based fruit drink, a fruit-based smoothie and a fruit-based meal replacer drink. The composition may comprise from 2 to 45% by weight on a wet basis of fruit based material. Wet basis refers to the fruit material including any water associated with it, for example 20 % by weight added apple juice corresponds to 20 % by weight fruit on a wet basis. More preferably, the composition comprises from 3 to 40% by weight on a wet basis of fruit based material, such as from 5 to 35% by weight on a wet basis of fruit based material. The fruit based material is preferably selected from a fruit puree, fruit concentrate, fruit juice or mixtures thereof. Examples of suitable fruits are orange, banana, pineapple, mango, passion fruit, coconut, blackberry, blueberry, apple, strawberry, cranberry, lemon, lime and mixtures thereof. A particularly preferred fruit based material is banana puree.

Other suitable fruits can be derived from, for example, pear, peach, plum, apricot, nectarine, grape, cherry, currant, raspberry, gooseberry, elderberry, blueberry, grapefruit, mandarin, grapefruit, cupuacu, mango, guava, tomato, rhubarb, carrot, beet, cucumber, pomegranate, kiwi, papaya, watermelon, passion fruit, tangerine, and cantaloupe.

A fruit beverage will usually have a pH of less than 5, more preferably less than 4.5 most preferably a pH between 3.0 and 4.1.

In another aspect, the beverage composition of the invention comprises material derived or extracted from coffee or tea or cocoa or mixtures thereof. The material may be derived directly or indirectly from the plant material, such as coffee beans, tea leaves or cocoa beans, for example by further processing, purification or extraction techniques. In this aspect of the invention, the beverage preferably has an energy content of less than 70 kcal /100g, more preferably less than 60 kcal/100g, such as from 40 to 55 kcal/100g. In one embodiment of this other aspect of the invention, the beverage composition preferably comprises at least 0.1% by weight cocoa, more preferably at least 0.5% by weight cocoa, most preferably from 1 to 2.5% by weight cocoa. Cocoa includes cocoa powder, cocoa mass and cocoa solids. In another embodiment of this other aspect of the invention, the beverage composition comprises at least 0.01% by weight coffee powder, preferably at least 0.04% by weight coffee powder, most preferably 0.05 to 0.3% by weight coffee powder. In a further embodiment of this other aspect of the invention, the beverage composition comprises green tea or a material or extract derived from green tea.

When tea solids are included, the beverages of the present invention preferably comprise from about 0.01% to about 1.2%, preferably from about 0.05% to about 0.8%, by weight of the beverage product, of tea solids. The term "tea solids" as used herein means solids extracted from tea materials including those materials obtained from the genus *Camellia* including *C*. *sinensis* and *C*. *assaimica,* for instance, freshly gathered tea leaves, fresh green tea leaves that are dried immediately after gathering, fresh green tea leaves that have been heat treated before drying to inactivate any enzymes present, unfermented tea, instant green tea, and partially fermented tea leaves. Green tea solids are tea leaves, tea plant stems, and other plant materials that are related and which have not undergone substantial fermentation to create black teas. Mixtures of unfermented and partially fermented teas can be used.

The beverage composition may be produced by a method which comprises:
(i) forming an emulsion of the fat in water in the presence of a protein;
(ii) forming a dispersion or solution of the thickening agent in water;
(iii) mixing the compositions prepared in steps (i) and (ii) under shear;
(iv) optionally adding one or more additional ingredients;
(v) optionally homogenising and/or pasteurising; and
(vi) optionally cooling.

Preferably, the method further comprises: (vii) packaging the composition. Packaging includes, for example, cans, bottles and sealed cartons.

The fat in the beverage composition described herein comprises at least 40% by weight of the fat phase of conjugated linoleic acid (CLA) or a derivative thereof. Preferably, according to the invention at least 60%, at least 70%, at least 80% or at least 90% by weight of the fat phase is conjugated linoleic acid (CLA) or a derivative thereof. The upper limit of CLA in the fat phase may be 95% or 100% by weight. The amount of CLA in the fat is based on the total weight of fatty acids in the fat (calculated as free fatty acid). The term "CLA", as used herein refers to conjugated linoleic acid and its derivatives. The CLA may be used in the form of the free acid. Derivatives of conjugated fatty acids include salts and esters thereof, or a mixture of two or more of these materials. Salts are non-toxic, pharmaceutically acceptable and/or acceptable for use in food products and/or pharmaceuticals and include, for example, salts with alkali metals and alkaline earth metals such as sodium, calcium and magnesium, preferably sodium. Esters include, for example, mono-, di- and tri- glycerides and mixtures thereof, and C₁ to C₆ alkyl esters (where the alkyl group can be straight chain or branched), as well as esters formed with alcohols that are acceptable in food products or pharmaceutical products, such as are disclosed in EP-A-1167340. Suitable alcohols include terpene alcohols or sesquiterpene alcohols, for example menthol, isopulegol, menthenol, carveol, carvomenthenol, carvomenthol, isobornylalcohol, caryophyllenealcohol, geraniol, farnesol and citronellol.

The preferred form of CLA for use in the invention is as a glyceride. Particularly preferred are diglycerides and triglycerides, with triglycerides being even more preferred.

The CLA may comprise one isomer or a mixture of two or more different isomers including: cis, cis; cis, trans; trans, cis; and trans, trans isomers. Preferred isomers are the trans10, cis12 and cis9, trans 11 isomers (also referred to herein as t10c12 and c9t11, respectively), including these isomers in relatively pure form, as well as mixtures with each other and/or mixtures with other isomers. More preferably, the conjugated linoleic acid or derivative thereof comprises trans10, cis12 and cis9, trans 11 isomers and the weight ratio of trans 10, cis12 isomer to cis9, trans 11 isomer or *vice versa* is at least 1.2:1, such as 1.3:1, even more preferably at least 1.5:1, e.g., in the range 1.5:1 to 100:1 or 1.5:1 to 10:1, such as a 60:40 or 80:20 mixture of the trans10, cis12: cis9, trans11 isomers. Particularly preferred are compositions comprising the trans10, cis 12 isomer or the cis9, trans 11 isomer as the major isomer component i.e., present in an amount of at least 55 %, preferably at least 60 %, more preferably at least 70 %, even more preferably at least 75 %, most preferably at least 80 %, such as at least 90 % or even 100 % by weight based on the total amount of conjugated linoleic acid. For example, the CLA may comprise c9t11 and t10c12 isomers and the weight ratio of the c9t11 to t10c12 isomers may be from 99:1 to 1 to 99, preferably from 90:10 to 10:90 most preferably from 80:20 to 20:80.

CLA can be produced in conventional ways. For example, CLA can be produced by known methods, such as that described in EP-A-902082, the contents of which are incorporated herein by reference. CLA products that are enriched in one or more isomers are disclosed in WO 97/18320. Examples of other fatty acids that may be present in the fat include linoleic acid, oleic acid, taxoleic, juniperonic, sciadonic, saturated fatty acids, pinolenic acid and EPA (eicosapentaenoic) and DHA (docosahexaenoic). These other fatty acids may be present as free acids or derivatives in the same way as CLA and are preferably present as glycerides, more preferably triglycerides.

The CLA is optionally blended with additional fatty acids or glycerides before being used in the fat of the present invention. When the compositions contain one or more fatty acids and/or glycerides in addition to the CLA, the additional fatty acid(s) and/or glycerides are preferably selected from liquid oils, such as soybean oil, sunflower oil, rape seed oil and cotton seed oil; cocoa butter and cocoa butter equivalents; palm oil and fractions thereof; enzymically made fats; pine nut oil; fish oils and fractions thereof; conjugated linoleic acid and enriched isomer mixtures; gamma linolenic acid and enriched mixtures thereof; hardened liquid oils; and mixtures thereof.

The beverage compositions of the invention may have one or more of: improved taste; more refreshing taste; stability in that there is little phase separation; no problems with aggregation and /or flocculation of particulate matter; no creaming; optimal cloudiness (some drinks should be cloudy, whilst others should not); good homogeneity; enhanced viscosity; good colour; a good level of sweetness; balanced flavour; a light feeling in the mouth; little or no aftertaste; and an optimal droplet size distribution. Many or all of these positive effects preferably persist over time e.g., all of the effects remain positive over a period of at least 3 months, preferably about 6 to 12 months. Surprisingly, these positive attributes can be achieved in beverages having relatively low energy contents. This means that it is possible to produce a low calorie product, particularly in a fruit-based beverage, comprising CLA.

The CLA can be included in the beverage of the invention as an oil or in the form of a powder, such as a free flowing powder. CLA and its derivatives in powder form can be produced, for example, by spray drying CLA, or a fat comprising CLA, with protein and/or carbohydrate, with the powder typically comprising from 50 to 90% by weight of fat. A preferred powder comprises 70 to 90% by weight triglyceride of which at least 70% by weight is CLA. It has been found that use of the powder can give extra stability to the beverage.

The listing or discussion of an apparently prior-published document in this specification should not necessarily be taken as an acknowledgement that the document is part of the state of the art or is common general knowledge.

The following non-limiting examples illustrate the invention and do no limit its scope in any way. In the examples and throughout this specification, all percentages, parts and ratios are by weight unless indicated otherwise.

### Examples

### Example 1 (Comparative)

### Instant foaming coffee drink comprising CLA

An instant foaming coffee drink is prepared with CLA (Clarinol™, Lipid Nutrition BV, Wormerveer, The Netherlands) comprising 3.4 g active CLA (CLA c9,t11+CLA t10,c12) per serving of 300 gram.

**Formulation:**

| | |
|---|---|
| 33.0 | Skimmed milk powder |
| 30.0 | Sugar |
| 24.0 | Cold soluble foaming cappuccino base Vana-Cappa CS (Friesland Foods Kievit) |
| 11.4 | Clarinol™ powder |
| 1.0 | Colour Malk 50S-WS-P (Chr. Hansen) |
| 0.4 | Coffee flavour QL80821 (Quest International) |
| 0.2 | Colour Vegex Annatto WS2-P (Chr. Hansen) |

CLARINOL™ is a trademark of Lipid Nutrition BV (Wormerveer, The Netherlands) and has the following composition:

| | |
|---|---|
| Oil (as glyceride) | 80% by weight |
| Carbohydrate | 10% by weight |
| Protein | 7.5% by weight |
| Total CLA | 610 mg/g |
| C9t11 and t10c12 isomers | 570 mg/g |

All ingredients were dry blended. 50 g of this mix was dissolved in 250 g cold water and stirred for about 10 seconds.

Nutritional information (per 250g serving):

| | |
|---|---|
| Energy | 220 kcal / 930 kJ |
| Protein | 7.7 g |
| Fat | 7.4 g |
| CLA c9,t11+t10,c12 | 3.4 |

### Example 2

### UHT chocolate milk drink containing CLA

**Formulation:**

| | |
|---|---|
| 90.5 | Skimmed milk (0% fat) to 100% |
| 6.0 | Sugar |
| 1.5 | Cocoa D-11-A (ADM) |
| 1.84 | Clarinol™ G-80 |
| 0.09 | Milk flavour QL87218 (Quest International) |
| 0.03 | Carrageenan Grindsted® CL220 (Danisco) |
| 0.01 | Caramel flavour QL68744 (Quest International) |

Cocoa was mixed with 10% of milk and stored at 4 °C for several hours to fully hydrate the cocoa. A 18.6% emulsion of Clarinol G-80 in milk was made by heating milk to 60 °C and slowly mixing-in Clarinol G-80 using high-shear mixing. The mixture was homogenised dual-stage 200/50 bar and cooled to 4 °C until further use.

A dry-mix of sugar and carrageenan was made and the mix added to rest of milk while stirring. Lumps have to been avoided. The pre-emulsion, pre-hydrated cocoa and flavours were added to the mixture, .pre-heated to 75 °C, indirect UHT 3-5 seconds 142 °C, cooled to 75 °C. Then homogenised down-stream dual-stage 150/30 bar, cooled to <20 °C and filled aseptically.

Nutritional information (per serving of 250 g):

| | |
|---|---|
| Energy | 197 kcal / 829 kJ |
| Protein | 10.0 g |
| Carbohydrate | 29.0 g |
| Fat | 5.2 g |
| CLA c9,t11+t10,c12 | 3.4 g |

### Example 3

### One-shot yoghurt drink containing CLA

| | |
|---|---|
| Batch size [kg] | 100 |

| Ingredient | Supplier | Dosage [%] | Dosage [g] | Direct [g] | Pectin solution 4% | Whey protein solution | Pre-emulsion 25% |
|---|---|---|---|---|---|---|---|
| Low fat yoghurt | | 70,00% | 70000 | 49000 | | | 21000 |
| Clarinol G-80 | Lipid Nutrition | 7,00% | 7000 | | | | 7000 |
| Whey protein powder 35% Hiprotal 835 | Friesland Foods Domo | 2,00% | 2000 | | | 2000 | |
| Sweetener Candarel | | 1,20% | 1200 | 1200 | | | |
| Pectin Grinsted AMD783 | Danisco | 0,325% | 325 | | 325 | | |
| Flavour green tea QL73669 | Quest | 0,10% | 100 | 100 | | | |
| Flavour lemon QL16062 | Quest | 0,11% | 110 | 110 | | | |
| Colour C-10,000P-WS-AP | Chr. Hansen | 0,005% | 5 | 5 | | | |
| Citric acid 50% till pH=4.0 +/-0.1 | | 0,40% | 400 | 400 | | | |
| Water | | 18,86% | 18860 | | 7800 | 11060 | |
| Total | | 100,00% | 100000 | 50815 | 8125 | 13060 | 28000 |

A 4% solution of pectin syrup in hot water of >90 °C was prepared and cooled. The whey protein powder was dispersed in the rest of water heated to 40 °C, hydrated at least for15 minutes. Then a 25% pre-emulsion of Clarinol™ G-80 in yoghurt was made by heating the yoghurt (75%) to 60 °C and slowly mixing in Clarinol™. The mixture was homogenised dual-stage 200/50 bar and cooled to 4 °C till further use.

The rest of the yoghurt was stirred by avoiding air uptake. The whey protein solution, the pectin syrup, sweetener, the pre-emulsion, flavours and colour were added. 50% citric acid solution was added to adjust the pH to 4.0. The whole mixture was pre-heated to 40 °C, homogenised dual-stage 180/18 bar, heated 5s to 104 °C and cooled to 5 °C. As last step the mixture was filled aseptically.

### Example 4

### Low calorie yoghurt drink passion fruit with CLA

One-shot yoghurt drink with Clarinol™:
- 3.4 g active CLA (c9t11 + t10c12) per serving of 150 gram = optimal daily intake
- Passion fruit flavour
- No sugar added

**Formulation (wt%)**

| | |
|---|---|
| 70.0 | Yoghurt (0% fat) |
| 2.3 | Clarinol® G-80 |
| 0.325 | Pectin Grindsted® AMD783 (Danisco) |
| 2.0 | Whey protein powder 35% Hiprotal® 835 (Friesland Foods Domo) |
| 1.2 | Sweetener (aspartame/acesulfame-K/maltodextrin) |
| 0.15 | Passion fruit flavour (Quest International) |
| 0.01 | Colour annatto A-720-WS-AP (Chr. Hansen) |
| 0.005 | Colour turmeric T-PT8-WS (Chr. Hansen) |
| + | Citric acid 50% till pH=4.0 |
| 19.3 | Water till 100% |

A 5% solution of pectin syrup in hot water of >90 °C is prepared and cooled. The whey protein powder is dispersed in the rest of water heated to 40 °C and hydrated at least for 15 minutes. Then a 25% pre-emulsion of Clarinol™ G-80 in yoghurt is made by heating the yoghurt (75%) to 60 °C and slowly mixing in Clarinol™. The mixture is homogenised dual-stage 200/50 bar and cooled to 4 °C till further use.

The rest of the yoghurt is stirred by avoiding air uptake. The whey protein solution, the pectin syrup, sweetener, the pre-emulsion, flavours and colour are added. 50% citric acid solution is added to adjust the pH to 4.0. The whole mixture is pre-heated to 40 °C, homogenised dual-stage 180/18 bar, heated 5s to 104 °C and cooled to 5 °C. As a last step, the mixture is filled aseptically.

Nutritional information (per serving of 150 gram):

| | |
|---|---|
| Energy | 81.4 kcal / 339 kJ |
| Protein | 5.4 g |
| Carbohydrate | 6.8 g |
| Fat | 3.6 g |
| CLA c9t11+t19c12 | 3.4 g |

### Example 5

### Stability of CLA In Beverage Compositions of the Invention

4.8 1 of yoghurt drink was prepared comprising 4.6g CLA as the triglyceride (Clarinol ™ from Lipid Nutrition BV, Wormerveer, The Netherlands) or 4.6g safflower oil/100 g yoghurt drink without adding any colors or flavors.

### Recipe:

The following yoghurt drinks are prepared:

**FORMULATION (%)**

| | |
|---|---|
| 70.0 | Low fat yoghurt (0.5% fat)¹ |
| **4.6** | Clarinol or Safflower oil² |
| 5.0 | Sugar |
| 2.0 | Whey protein powder (Friesland Foods) |
| 0.325 | Pectin Grindsted® AMD783 (Danisco) |
| 0.007 | Splenda® sucralose (Tate & Lyle) |
| 18.068 | Water till 100% |
| | Sodium citrate / citric acid till pH =4.0 +/-0.1 |

| | |
|---|---|
| ¹Friese Vlag, 0.5% milkfat ²All oils had the same amount of antioxidant mixture: 2500 ppm rosemary extract and 1000 ppm d-mixed tocopherols (=2000ppm Tocoblend L50-IP) Used Rosemary extract: Herbalox® seasoning, HT-O, NS; code 41-19-25; Lotno. 707976K | |

A solution of a 4% pectin in hot water of >90°C was prepared.

Whey protein powder was dispersed in the rest of water, heated to 40°C and hydrated for at least 15 minutes.
A 25% pre-emulsion of the oil in yogurt was made. The yoghurt was heated to 60 °C and slowly the oil was mixed-in. The mixture was homogenized dual-stage 200/50 bar and cooled to 4°C till further use. Sugar, sweetener (100x solution in water), pectin solution, whey protein solution and pre-emulsion were added to this mixture. Sodium citrate / citric acid till pH=4 +/- 0.1 was added. The mixture was pre-heated to 40°C, homogenized dual-stage 200/50 bar, and filled in bottles.

For each of the oils the following experimental set up was prepared:
9 samples containing 400 ml yoghurt drink were prepared. 4 samples were stored at 7°C and 4 bottles at 25°C. One sample of 400 ml yoghurt was directly processed by extracting the oil with the methanol/ chloroform extraction method (starting sample). After 2, 4, 7 and 10 days of storage the oil was extracted from each sample with the methanol/ chloroform extraction method.

The extracted oils were tested for rancimat analysis.

As comparison all oils were stored and extracted the same way as described above:
Separate samples of clarinol and safflower oil were prepared and stored at 7°C and at 25°C, respectively. After 2, 4, 7 and 10 days from each storage, the oil was extracted with the methanol/ chloroform extraction procedure.

### Fat extraction procedure for yoghurt drinks:

All yoghurt drink mixtures were extracted in 4 portions; this is due to the workability of the samples together with the solvents which are needed to conduct the extractions.

To about 100 g of yoghurt mixture about 10 g of KCl, 100 ml chloroform and 50 ml methanol were added. The samples were put on a turax for 3 minutes with a speed of about 12000 rpm. The mixture was divided in 2x100 g bottles. This procedure was repeated 4 times until 8x100 g bottles were received. The bottles were centrifuged for 5 minutes at 4500 rpm. The upper layer of each bottle was removed with a pipette. The lower layer together with the white pellet which was received after centrifugation was put over a filter. The filtrate was put in an empty flask on the rotor vapour equipment. The temperature of the water bath was set at 35 °C and the pressure slowly brought down to about 20 mbar. Nitrogen was bubbled through the sample overnight.

### Results

Temperature 4-7 °C Rancimat (AOCS Cd 12b-92)

| | | | | | |
|---|---|---|---|---|---|
| Days | 0 | 2 | 4 | 7 | 10 |
| Clarinol YD | 0.9 | 1.7 | 3.4 | 1.5 | 0.6 |
| Safflower YD | 5.9 | 3.8 | 1.9 | 4.2 | 1.1 |
| Clarinol oil | | 2.1 | 1.9 | 1.8 | 2.2 |
| Safflower oil | 3.2 | 2.9 | 3.1 | 3.1 | 3.1 |

| | | | | | |
|---|---|---|---|---|---|
| YD = yoghurt drink | | | | | |

A higher rancimat value indicates a greater stability of the oil. Therefore, the results show that the CLA is surprisingly more stable in the drink than safflower oil, even though both oils have comparable stability when not formulated.

## Claims

1. Beverage composition comprising fat, from 0.5 to 10% by weight of protein, thickener and water, wherein the fat comprises at least 60% by weight of conjugated linoleic acid (CLA) in the form of a triglyceride and wherein the composition comprises less than 4% by weight of added sugar.

2. Beverage as claimed in Claim 1, wherein the composition has an energy content of less than 100 kcal /100g preferably less than 80 kcal/100g, most preferably 55 to 75 kcal/100g, and/or which is free of lecithin, and/or which comprises from 2 to 8% by weight of protein, and/or which is free of added sugar.

3. Beverage as claimed in any one of the preceding claims, wherein the protein is selected from the group consisting of whey solids, skimmed milk powder, soya protein, low fat yoghurt, skimmed milk or mixtures thereof.

4. Beverage as claimed in any one of the preceding claims, wherein the fat comprises at least 70% by weight CLA, such as from 85 to 99% by weight CLA, and/or wherein the CLA preferably comprises c9t11 and t10c12 isomers and the weight ratio of the c9t11 to t10c12 isomers is from 99:1 to 1 to 99, preferably 90:10 to 10:90, more preferably 80:20 to 20:80.

5. Beverage as claimed in any one of the preceding claims, which comprises from 0.5 to 10% by weight fat, preferably from 3 to 7% by weight fat, and/or at least 60% by weight of water, preferably at least 70% water, more preferably from 80 to 95% water, and/or from 0.001 to 10%, preferably from 0.1 to 5%, more preferably from 0.2 to 4% by weight of a thickener, such as for example pectin, carrageenan, guar gum, gelatine and xanthan gum and mixtures thereof.

6. Beverage as claimed in any one of the preceding claims, which is a fruit drink, or a yoghurt-based fruit drink, fruit-based smoothie or a fruit based meal replacer drink.

7. Beverage as claimed in any one of the preceding claims, which comprises a sugar replacer, or a sweetening agent, such as for example, aspartame, acesulfame - K and mixtures thereof.

8. Beverage according to any one of the preceding claims, which comprises from 2 to 45% by weight on a wet basis of fruit based material, preferably from 3 to 40% by weight on a wet basis of fruit based material, more preferably from 5 to 25% by weight on a wet basis of fruit based material, wherein the fruit based material is preferably selected from a fruit puree, fruit concentrate, fruit juice or mixtures thereof, such as banana puree.

9. Beverage according to any one of the preceding claims having a pH of less than 5, preferably less than 4.5 most preferably a pH between 3.0 and 4.1.

10. Beverage according to any one of Claims 1 to 5, comprising material derived or extracted from coffee or tea or cocoa or mixtures thereof, and preferably having an energy content of less than 70 kcal/100g, such as less than 60 kcal/100g, or from 35 to 50 kcal/100g.

11. Beverage according to Claim 10, comprising at least 0.1% by weight cocoa, preferably at least 0.5% by weight cocoa, most preferably from 1 to 2.5% by weight cocoa, or at least 0.01% by weight coffee powder, preferably at least 0.04% by weight coffee powder, most preferably 0.05 to 0.3% by weight coffee powder, or green tea or a material or extract derived from green tea.

12. Beverage according to any one of the preceding claims comprising one or more additives selected from flavours, colouring agents, vitamins, acidity regulators, preservatives, emulsifiers, antioxidants, dietary fibres and mixtures thereof, and/or which is free of dairy material.

13. Beverage as claimed in any one of the preceding claims, wherein the CLA is incorporated in the beverage in the form of a powder, preferably produced by spray drying CLA, or a fat comprising pinolenic acid or its derivatives, with protein and/or carbohydrate.

14. A process for producing a beverage composition according to any one of the preceding claims, which comprises:
(i) forming an emulsion of the fat in water in the presence of a protein;
(ii) forming a dispersion or solution of the thickening agent in water;
(iii) mixing the compositions prepared in steps (i) and (ii) under shear;
(iv) optionally adding one or more additional ingredients;
(v) optionally homogenising and/or pasteurising;
(vi) optionally cooling; and
(vii) optionally packaging the composition, and
the CLA is optionally incorporated in the water in the form of a powder, preferably produced by spray drying CLA or a fat comprising CLA, with protein and/or carbohydrate.

15. Use of a beverage composition according to any one of Claims 1 to 13 for a nutritional benefit, preferably body weight management.

## Patentansprüche

1. Getränkezusammensetzung, die Fett, 0,5 bis 10 Gew.-% Protein, Verdickungsmittel und Wasser umfasst, wobei das Fett wenigstens 60 Gew.-% konjugierte Linolsäure (*conjugated linoleic acid -* CLA) in der Form eines Triglycerids umfasst und wobei die Zusammensetzung weniger als 4 Gew.-% zugesetzten Zucker umfasst.

2. Getränk nach Anspruch 1, wobei die Zusammensetzung einen Energiegehalt von weniger als 100 kcal/100 g, vorzugsweise weniger als 80 kcal/100 g, am stärksten bevorzugt 55 bis 75 kcal/100 g aufweist und/oder frei von Lecithin ist und/oder 2 bis 8 Gew.-% Protein umfasst und/oder frei von zugesetztem Zucker ist.

3. Getränk nach einem der vorhergehenden Ansprüche, wobei das Protein ausgewählt ist aus der Gruppe bestehend aus Molkebestandteilen, Magermilchpulver, Sojaprotein, fettarmem Joghurt, Magermilch oder Mischungen daraus.

4. Getränk nach einem der vorhergehenden Ansprüche, wobei das Fett wenigstens 70 Gew.-% CLA, wie etwa 85 bis 99 Gew.-% CLA, umfasst und/oder wobei die CLA vorzugsweise c9t11- und t10c12-Isomere umfasst und das Gewichtsverhältnis der c9t11- bis t10c12-Isomere von 99:1 bis 1:99, vorzugsweise 90:10 bis 10:90, stärker bevorzugt 80:20 bis 20:80 beträgt.

5. Getränk nach einem der vorhergehenden Ansprüche, das 0,5 bis 10 Gew.-% Fett, vorzugsweise 3 bis 7 Gew.-% Fett und/oder wenigstens 60 Gew.-% Wasser, vorzugsweise wenigstens 70 % Wasser, stärker bevorzugt 80 bis 95 % Wasser und/oder 0,001 bis 10 %, vorzugsweise 0,1 bis 5 %, stärker bevorzugt 0,2 bis 4 Gew.-% eines Verdickungsmittels, wie etwa beispielsweise Pektin, Carrageen, Guargummi, Gelatine und Xanthangummi und Mischungen daraus umfasst.

6. Getränk nach einem der vorhergehenden Ansprüche, bei dem es sich um ein Fruchtgetränk oder ein Fruchtgetränk auf Joghurtbasis, einen Smoothie auf Fruchtbasis oder ein Mahlzeitersatzgetränk auf Fruchtbasis handelt.

7. Getränk nach einem der vorhergehenden Ansprüche, das einen Zuckerersatz oder ein Süßungsmittel, wie etwa beispielsweise Aspartam, Acesulfam K und Mischungen daraus, umfasst.

8. Getränk nach einem der vorhergehenden Ansprüche, das 2 bis 45 Gew.-% bezogen auf eine Feuchtebasis eines Inhaltsstoffs auf Fruchtbasis, vorzugsweise 3 bis 40 Gew.-% bezogen auf eine Feuchtebasis eines Inhaltsstoffs auf Fruchtbasis, stärker bevorzugt 5 bis 25 Gew.-% bezogen auf eine Feuchtebasis eines Inhaltsstoffs auf Fruchtbasis umfasst, wobei der Inhaltsstoff auf Fruchtbasis vorzugsweise ausgewählt ist aus einem Fruchtpüree, Fruchtkonzentrat, Fruchtsaft oder Mischungen daraus, wie etwa Bananenpüree.

9. Getränk nach einem der vorhergehenden Ansprüche, das einen pH-Wert von weniger als 5, vorzugsweise weniger als 4,5, am stärksten bevorzugt einen pH-Wert zwischen 3,0 und 4,1 aufweist.

10. Getränk nach einem der Ansprüche 1 bis 5, das einen Inhaltsstoff, der aus Kaffee oder Tee oder Kakao oder Mischungen daraus stammt oder aus diesen abgeleitet ist, umfasst und vorzugsweise einen Energiegehalt von weniger als 70 kcal/100 g, wie etwa weniger als 60 kcal/100 g oder von 35 bis 50 kcal/100 g aufweist.

11. Getränk nach Anspruch 10, umfassend wenigstens 0,1 Gew.-% Kakao, vorzugsweise wenigstens 0,5 Gew.-% Kakao, am stärksten bevorzugt 1 bis 2,5 Gew.-% Kakao oder wenigstens 0,01 Gew.-% Kaffeepulver, vorzugsweise wenigstens 0,04 Gew.-% Kaffeepulver, am stärksten bevorzugt 0,05 bis 0,3 Gew.-% Kaffeepulver oder Grüntee oder einen Inhaltsstoff oder einen Extrakt, der aus Grüntee stammt.

12. Getränk nach einem der vorhergehenden Ansprüche, das einen oder mehrere Zusatzstoffe umfasst, ausgewählt aus Geschmackstoffen, Farbstoffen, Vitaminen, Säureregulatoren, Konservierungsstoffen, Emulgatoren, Antioxidationsmitteln, Ballaststoffen und Mischungen daraus, und/oder frei von Milchbestandteilen ist.

13. Getränk nach einem der vorhergehenden Ansprüche, wobei die CLA in der Form eines Pulvers, vorzugsweise hergestellt durch Sprühtrocknen der CLA, oder eines Fetts, umfassend Pinolensäure oder deren Derivate, mit Protein und/oder Kohlenhydrate in das Getränk eingebunden ist.

14. Verfahren zum Herstellen einer Getränkezusammensetzung nach einem der vorhergehenden Ansprüche, das Folgendes umfasst:
(i) Ausbilden einer Fettemulsion in Wasser in der Anwesenheit eines Proteins;
(ii) Ausbilden einer Dispersion oder Lösung des Verdickungsmittels in Wasser;
(iii) Mischen der Zusammensetzungen, die in Schritt (i) und (ii) unter Scherung hergestellt worden sind;
(iv) optionales Hinzufügen eines oder mehrerer zusätzlicher Bestandteile;
(v) optionales Homogenisieren und/oder Pasteurisieren;
(vi) optionales Kühlen; und
(vii) optionales Verpacken der Zusammensetzung; und
die CLA wird optional in der Form eines Pulvers, vorzugsweise hergestellt durch Sprühtrocknen von CLA, oder eines Fetts, das CLA umfasst, mit Protein und/oder Kohlenhydrat in das Wasser eingebunden.

15. Verwendung einer Getränkezusammensetzung nach einem der Ansprüche 1 bis 13 für einen ernährungsspezifischen Nutzen, vorzugsweise Körpergewichtsmanagement.

## Revendications

1. Composition de boisson contenant de la matière grasse, de 0,5 à 10 % en poids de protéine, un épaississant et de l'eau, dans laquelle la matière grasse comprend au moins 60 % en poids d'acide linoléique conjugué (ALC) sous la forme de triglycéride, et la composition comprenant moins de 4 % en poids de sucre ajouté.

2. Boisson selon la revendication 1, dans laquelle la composition a une valeur calorique inférieure à 100 kcal/100 g, de préférence inférieure à 80 kcal/100 g, de manière plus préférable entre 55 et 75 kcal/100 g, et/ou qui ne contient pas de lécithine, et/ou qui contient de 2 à 8 % en poids de protéine, et/ou qui ne contient pas de sucre ajouté.

3. Boisson selon l'une quelconque des revendications précédentes, dans laquelle la protéine est sélectionnée dans le groupe constitué de solides du lactosérum, de poudre de lait écrémé, de protéine de soja, de yaourt maigre, de lait écrémé ou de leurs mélanges.

4. Boisson selon l'une quelconque des revendications précédentes, dans laquelle la matière grasse contient au moins 70 % en poids d'ALC, par exemple de 85 à 99 % en poids d'ALC, et/ou dans laquelle l'ALC contient de préférence des isomères c9t11 et t10c12 et le rapport pondéral des isomères c9t11 à t10c12 est entre 99:1 et 1 à 99, de préférence entre 90:10 et 10:90, de manière plus préférable entre 80:20 et 20:80.

5. Boisson selon l'une quelconque des revendications précédentes, qui contient de 0,5 à 10 % en poids de matière grasse, de préférence de 3 à 7 % en poids de matière grasse, et/ou au moins 60 % en poids d'eau, de préférence au moins 70 % d'eau, de manière plus préférable de 80 à 95 % d'eau, et/ou de 0,001 à 10 %, de préférence de 0,1 à 5 %, et de manière encore plus préférable de 0,2 à 4 % en poids d'un épaississant, comme par exemple de la pectine, du carraghénane, de la gomme de guar, de la gélatine et de la gomme de xanthane et leurs mélanges.

6. Boisson selon l'une quelconque des revendications précédentes, qui est une boisson aux fruits, ou une boisson aux fruits à base de yaourt, un frappé aux fruits ou une boisson substitut de repas à base de fruits.

7. Boisson selon l'une quelconque des revendications précédentes, qui contient un substitut du sucre, ou un édulcorant, comme par exemple, de l'aspartame, de l'acésulfame-K et leurs mélanges.

8. Boisson selon l'une quelconque des revendications précédentes, qui contient de 2 à 45 % en poids sur une base humide de matière à base de fruit, de préférence de 3 à 40 % en poids sur une base humide de matière à base de fruit, de manière plus préférable de 5 à 25 % en poids sur une base humide de matière à base de fruit, dans laquelle la matière à base de fruit est de préférence sélectionnée parmi une purée de fruits, un concentré de fruits, un jus de fruits ou leurs mélanges, comme une purée de banane.

9. Boisson selon l'une quelconque des revendications précédentes présentant un pH inférieur à 5, de préférence inférieur à 4,5 et de manière plus préférable un pH compris entre 3,0 et 4,1.

10. Boisson selon l'une quelconque des revendications 1 à 5, contenant une matière dérivée ou extraite du café, du thé, du cacao ou de leurs mélanges, et présentant de préférence une valeur calorique inférieure à 70 kcal/100 g, comme par exemple inférieure à 60 kcal/100g, ou entre 35 et 50 kcal/100 g.

11. Boisson selon la revendication 10, contenant au moins 0,1 % en poids de cacao, de préférence au moins 0,5 % en poids de cacao, de manière plus préférable de 1 à 2,5 % en poids de cacao, ou au moins 0,01 % en poids de poudre de café, de préférence au moins 0,04 % en poids de poudre de café, de manière plus préférable de 0,05 à 0,3 % en poids de poudre de café, ou du thé vert, une matière ou un extrait dérivé du thé vert.

12. Boisson selon l'une quelconque des revendications précédentes contenant un ou plusieurs additifs sélectionnés parmi des arômes, des colorants, des vitamines, des régulateurs d'acidité, des conservateurs, des émulsifiants, des antioxydants, des fibres alimentaires et leurs mélanges, et/ou qui ne contient pas de produit laitier.

13. Boisson selon l'une quelconque des revendications précédentes, dans laquelle l'ALC est incorporé dans la boisson sous la forme d'une poudre, de préférence produite par séchage par atomisation d'ALC, ou de matière grasse contenant de l'acide pinolénique ou ses dérivés, avec une protéine et/ou un glucide.

14. Processus de production d'une composition de boisson selon l'une quelconque des revendications précédentes, qui comprend les étapes suivantes :
(i) former une émulsion de matière grasse dans l'eau en présence d'une protéine ;
(ii) former une dispersion ou une solution de l'agent épaississant dans l'eau ;
(iii) mélanger les compositions préparées aux étapes (i) et (ii) dans des conditions de cisaillement ;
(iv) ajouter facultativement un ou plusieurs ingrédients supplémentaires ;
(v) homogénéiser et/ou pasteuriser facultativement ;
(vi) refroidir facultativement ; et
(vii) conditionner facultativement la composition, et
l'ALC est facultativement incorporée à l'eau sous la forme d'une poudre, de préférence produite par séchage par atomisation d'ALC, ou de matière grasse contenant de l'ALC, avec une protéine et/ou un glucide.

15. Utilisation d'une composition de boisson selon l'une quelconque des revendications 1 à 13 présentant un avantage nutritionnel, de préférence la gestion du poids corporel.
